# EUROPÄISCHE PATENTANMELDUNG

(11) **EP 2 223 598 A1**
(43) Veröffentlichungstag der Anmeldung: **01.09.2010**
(21) Anmeldenummer: 09153443.8
(22) Anmeldetag: 23.02.2009
(51) Int. Cl.: A01N 43/40, A01N 43/90, A01N 33/12, A01N 57/04, A01N 37/34, A01N 33/18, A01P 7/04

(54) **Insektizide Zusammensetzungen mit verbesserter Wirkung**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft die Steigerung der Wirkung von Pflanzenschutzmitteln enthaltend Sulfoximine der Formel (I) 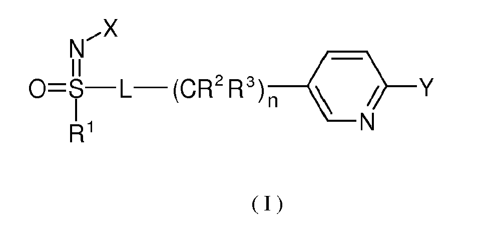 wobei X, L, Y und R¹ bis R³ wie oben definiert sind, durch die Zugabe von Ammoniumsalzen und / oder Phosphoniumsalzen oder durch die Zugabe von Ammonium- bzw. Phosphoniumsalzen und Penetrationsförderern, die entsprechenden Mittel, Verfahren zu ihrer Herstellung und ihre Anwendung im Pflanzenschutz.

## Beschreibung

Die vorliegende Erfindung betrifft die Steigerung der Wirkung von Pflanzenschutzmitteln enthaltend bestimmte Sulfoximine durch die Zugabe von Ammonium- oder Phosphoniumsalzen oder durch die Zugabe von Ammonium- oder Phosphoniumsalzen und Penetrationsförderern, die entsprechenden Mittel, Verfahren zu ihrer Herstellung und ihre Anwendung im Pflanzenschutz.

Die in den erfindungsgemäßen Zusammensetzungen enthaltenen Sulfoximine sind bereits als Mittel zur Bekämpfung von tierischen Schädlingen, insbesondere Insekten bekannt und können nach im Stand der Technik beschriebenen Verfahren hergestellt werden (WO 2007/095229 A2, WO 2007/149134 A1, WO 2008/097235 A1, US 2008207910 A1). Die Wirksamkeit dieser Verbindungen ist gut, jedoch insbesondere bei niedrigen Aufwandmengen und Konzentrationen nicht immer voll zufriedenstellend. Es besteht deshalb ein Bedarf für eine Wirkungssteigerung der die Verbindungen enthaltenden Pflanzenschutzmittel. Bekannt sind auch insektizide Zusammensetzungen mit verbesserter Wirkung enthaltend eine andere Gruppe von Sulfoximinen (WO 2007/068355 A1).

Aufgabe der vorliegenden Erfindung war es nun, insektizide Zusammensetzungen mit verbesserter Wirkung enthaltend die aus der WO 2007/095229 A2 bekannten Sulfoximine zu finden, die eine gegenüber den aus der WO 2007/068355 A1 bekannten insektiziden Zusammensetzungen noch stärker verbesserte Wirkung aufweisen.

Die in den erfindungsgemäßen Zusammensetzungen enthaltenen Sulfoximine lassen sich durch die Formel (I) darstellen 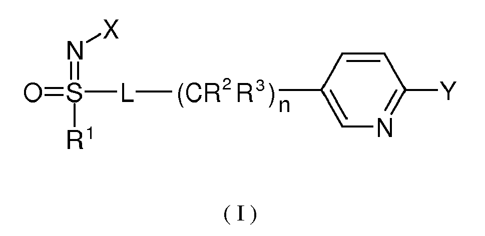 in welcher
- X: für NO₂, CN oder COOR⁴ steht,
- L: für eine Einfachbindung steht oder R¹, S und L zusammen einen 4-, 5- oder 6-gliedrigen Ring bilden,
- R¹: für C₁-C₄-Alkyl steht,
- R¹ und R²: unabhängig voneinander für Wasserstoff, C₁-C₄-Alkyl, Fluor, Chlor oder Brom stehen,

- n: für eine ganze Zahl von 0 bis 3 steht,
- Y: für Halogen-C₁-C₄-alkyl steht und
- R⁴: für C₁-C₃-Alkyl steht.

In einer hervorgehobenen Gruppe der Verbindungen der Formel (I) steht X für NO₂.

In einer weiteren hervorgehobenen Gruppe der Verbindungen der Formel (I) steht X für CN.

In einer weiteren hervorgehobenen Gruppe der Verbindungen der Formel (I) steht Y für CF₃.

In einer weiteren hervorgehobenen Gruppe der Verbindungen der Formel (I) stehen R² und R³ unabhängig voneinander für Wasserstoff, Methyl oder Ethyl.

Eine weitere hervorgehobene Gruppe der Verbindungen der Formel (I) sind Verbindungen der Formel (Ia) 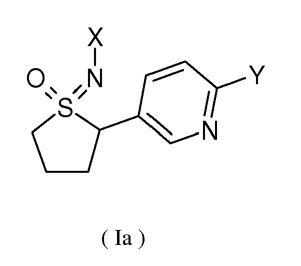 worin X für NO₂, CN oder COOR⁴ steht, Y für Halogen-C₁-C₄-alkyl steht und R⁴ für C₁-C₃-Alkyl steht.

In einer weiteren hervorgehobenen Gruppe der Verbindungen der Formel (I) steht L für eine Einfachbindung.

In einer weiteren hervorgehobenen Gruppe der Verbindungen der Formel (I) steht L für eine Einfachbindung, X steht für NO₂ oder CN, Y steht für CF₃, R¹ steht für Methyl oder Ethyl, R² und R³ stehen unabhängig voneinander für Wasserstoff, Methyl oder Ethyl und n steht für eine ganze Zahl von 1 bis 3.

Desweiteren seien die folgenden Verbindungen der allgemeinen Formel (I) genannt
- Verbindung (I-1) besitzt die Formel 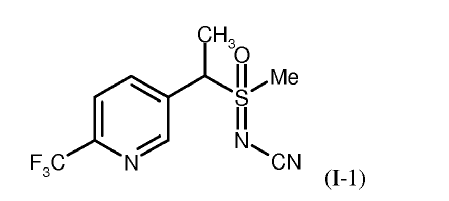 und ist bekannt aus WO 2007/095229 A2.
- Verbindung (I-2) besitzt die Formel 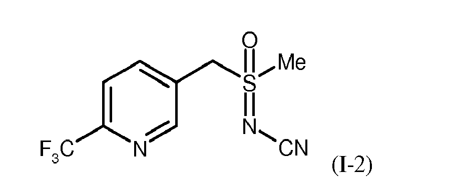 und ist bekannt aus WO 2007/095229 A2.
- Verbindung (I-3) besitzt die Formel 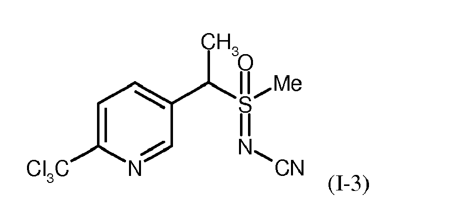 und ist bekannt aus WO 2007/095229 A2.
- Verbindung (I-4) besitzt die Formel 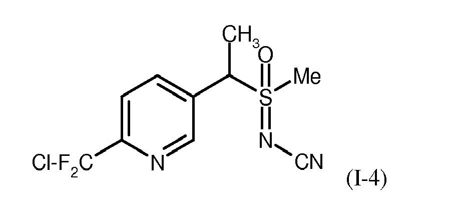 und ist bekannt aus WO 2007/095229 A2.
- Verbindung (I-5) besitzt die Formel 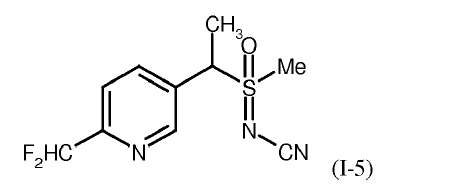 und ist bekannt aus WO 2007/095229 A2.
- Verbindung (I-6) besitzt die Formel 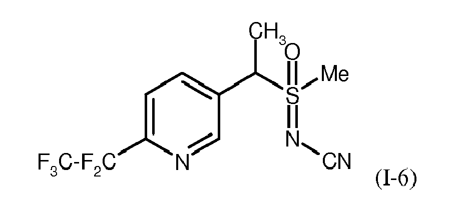 und ist bekannt aus WO 2007/095229 A2.
- Verbindung (I-7) besitzt die Formel 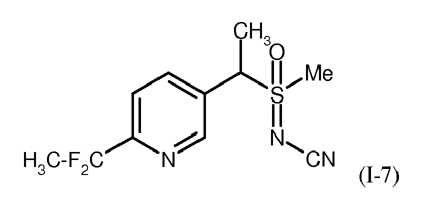 und ist bekannt aus WO 2007/095229 A2.
- Verbindung (Ia-1) besitzt die Formel 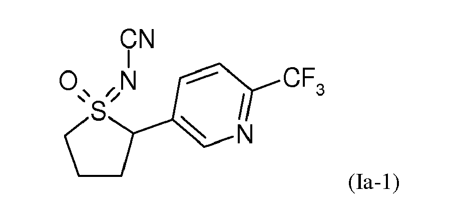 und ist bekannt aus WO 2007/095229 A2.

Als Vergleichssubstanzen dienen Verbindungen der Formel (II) 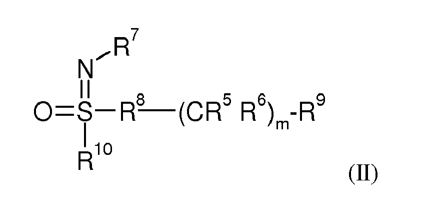 in welcher
- m: für eine ganze Zahl von 0 bis 3 steht,
- R⁵ und R⁶: unabhängig voneinander für Wasserstoff, Methyl, Ethyl, Fluor, Chlor oder Brom stehen,
- R⁷: für Nitro, CN oder COOR¹¹ steht,
- R⁸: für eine Einfachbindung steht oder R¹⁰, S und R⁸ zusammen für einen fünf- oder sechsgliedrigen Ring stehen,
- R⁹: für 6-Halogen-pyrid-3-yl, 6-(C₁-C₄)-Alkylpyrid-3-yl, 6-(C₁-C₄)-Alkoxypyrid-3-yl, 2-chlorthiazol-4-yl oder 3-Chlorisoxazol-5-yl steht, wenn m = 0-3 und R⁸ eine Einfachbindung ist oder für Wasserstoff, C₁-C₄-Alkyl, Phenyl, 6-Halogen-pyrid-3-yl, 6-(C₁-C₄)-Alkylpyrid-3-yl, 6-(C₁-C₄)-Alkoxypyridin-3-yl, 2-Chlorthiazol-4-yl oder 3-Chlorisoxazol-5-yl steht wenn m = 0-1 ist und R¹⁰, S und R⁸ zusammen einen fünf- oder sechsgliedrigen Ring bilden,
- R¹⁰: für Methyl oder Ethyl steht und
- R¹¹: für C₁-C₃-Alkyl steht,
die aus der WO 2006/060029 bekannt sind.
Konkret sei die Verbindung der Formel (II-1) 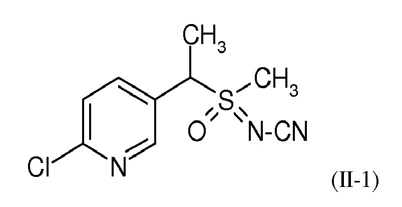 als Vergleichssubstanz gegenüber den Verbindungen der Formel (I) genannt.

Sulfoximine der Formel (I) besitzen eine breite insektizide Wirkung, die Wirkung lässt im Einzelnen aber zu wünschen übrig.

Die Wirkstoffe können in den erfindungsgemäßen Zusammensetzungen in einem breiten Konzentrationsbereich eingesetzt werden. Die Konzentration der Wirkstoffe in der Formulierung beträgt dabei üblicherweise 0,1 - 50 Gew.-%.

In der Literatur wurde bereits beschrieben, dass sich die Wirkung verschiedener Wirkstoffe durch Zugabe von Ammonium- oder Phosphoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4 844 734, US 5 462 912, US 5 538 937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. In wieder anderen Fällen handelt es sich um Salze von Sulfonsäuren, bei denen die Säuren selber paralysierend auf Insekten wirken (US 2 842 476). Eine Wirkungssteigerung durch Ammoniumsulfat ist für die Herbizide Glyphosat und Phosphinothricin beschrieben (US 6 645 914, EP-A 0 036 106).

Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Eine Steigerung der Wirkung von bestimmten Inhibitoren des nikotinergen Acetylcholinrezeptors, darunter auch eine Gruppe von aus der WO 2006/060029 bekannten Sulfoximinen, durch Zugabe von Ammonium- oder Phosphoniumsalzen ist in der WO 2007/068355 A1 beschrieben.

Es wurde nun völlig überraschend gefunden, dass sich die Wirkung von Sulfoximinen der Formel (I) durch den Zusatz von Ammonium- und/oder Phosphoniumsalzen zur Anwendungslösung (Tankmix-Anwendung) oder durch den Einbau dieser Salze in eine Formulierung enthaltend solche Insektizide, gegenüber dem für die in der WO 2007/068355 beschriebenen Sulfoximine gezeigten Effekt, noch einmal deutlich steigern lässt. Gegenstand der vorliegenden Erfindung ist also die Verwendung von Ammonium- und/oder Phosphoniumsalzen zur Wirkungssteigerung von Sulfoximinen der Formel (I). Gegenstand der Erfindung sind ebenfalls Mittel, die solche Insektizide und die Wirkung steigernde Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Ammonium- und Phosphoniumsalze, die erfindungsgemäß die Wirkung von Pflanzenschutzmitteln enthaltend Sulfoximine der Formel (I) steigern, werden durch Formel (III) definiert 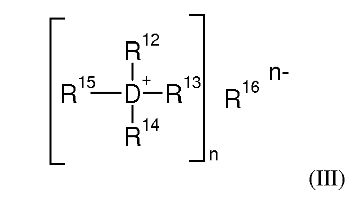 in welcher
- D: für Stickstoff oder Phosphor steht,
- D: bevorzugt für Stickstoff steht,
- R¹², R¹³, R¹⁴ und R¹⁵: unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
- R¹², R¹³, R¹⁴ und R¹⁵: bevorzugt unabhängig voneinander für Wasserstoff oder jeweils gegebenenfalls substituiertes C₁-C₄-Alkyl stehen, wobei die Substituenten aus Halogen, Nitro und Cyano ausgewählt sein können,
- R¹², R¹³, R¹⁴ und R¹⁵: besonders bevorzugt unabhängig voneinander für Wasserstoff, Methyl, Ethyl, n-Propyl, iso-Propyl, n-Butyl, iso-Butyl, sec-Butyl oder tert-Butyl stehen,
- R¹², R¹³, R¹⁴ und R¹⁵: ganz besonders bevorzugt für Wasserstoff stehen,
- R¹², R¹³, R¹⁴ und R¹⁵: weiterhin ganz besonders bevorzugt gleichzeitig für Methyl oder gleichzeitig für Ethyl stehen,
- n: für 1, 2, 3 oder 4 steht,
- n: bevorzugt für 1 oder 2 steht,
- R¹⁶: für ein anorganisches oder organisches Anion steht,
- R¹⁶: bevorzugt für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht,
- R¹⁶: weiterhin bevorzugt für Carbonat, Pentaborat, Sulfit, Benzoat, Hydrogenoxalat, Hydrogencitrat, Methylsulfat oder Tetrafluoroborat steht,
- R¹⁶: besonders bevorzugt für Laktat, Sulfat, Nitrat, Thiosulfat, Thiocyanat, Citrat, Oxalat oder Formiat steht,
- R¹⁶: außerdem besonders bevorzugt für Monohydrogenphosphat oder Dihydrogenphosphat steht und
- R¹⁶: ganz besonders bevorzugt für Sulfat steht.

Die Ammonium- und Phosphoniumsalze der Formel (III) können in einem breiten Konzentrationsbereich zur Steigerung der Wirkung von Pflanzenschutzmitteln enthaltend Sulfoximine der Formel (I) eingesetzt werden. Im Allgemeinen werden die Ammonium- oder Phosphoniumsalze im anwendungsfertigen Pflanzenschutzmittel in einer Konzentration von 0,5 bis 80 mmol/l, bevorzugt 0,75 bis 37,5 mmol/l, besonders bevorzugt 1,5 bis 25 mmol/l eingesetzt. Im Fall eines formulierten Produktes wird die Ammonium- und/oder Phosphoniumsalzkonzentration in der Formulierung so gewählt, dass sie nach Verdünnung der Formulierung auf die gewünschte Wirkstoffkonzentration in diesen angegebenen allgemeinen, bevorzugten oder besonders bevorzugten Bereichen liegt. Die Konzentration des Salzes in der Formulierung beträgt dabei üblicherweise 1 - 50 Gew.-%.

In einer bevorzugten Ausführungsform der Erfindung wird den Pflanzenschutzmitteln zur Wirkungssteigerung nicht nur ein Ammonium- und/oder Phosphoniumsalz, sondern zusätzlich ein Penetrationsförderer zugegeben. Es ist als völlig überraschend zu bezeichnen, dass selbst in diesen Fällen eine noch weiter gehende Wirkungssteigerung zu beobachten ist. Gegenstand der vorliegenden Erfindung ist also ebenfalls die Verwendung einer Kombination von Penetrationsförderer und Ammonium- und/oder Phosphoniumsalzen zur Wirkungssteigerung von Pflanzenschutzmitteln, die insektizid wirksame Sulfoximine der Formel (I) als Wirkstoff enthalten. Gegenstand der Erfindung sind ebenfalls Mittel, die insektizid wirksame Sulfoximine der Formel (I), Penetrationsförderer und Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Als Penetrationsförderer kommen beispielsweise Alkanol-alkoxylate in Betracht. Erfindungsgemäße Penetrationsförderer sind Alkanol-alkoxylate der Formel

R-O-(-AO)ᵥ-R' (IV)

in welcher
- R: für geradkettiges oder verzweigtes Alkyl mit 4 bis 20 Kohlenstoffatomen steht,
- R': für Wasserstoff, Methyl, Ethyl, n-Propyl, iso-Propyl, n-Butyl, iso-Butyl, tert-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- v: für Zahlen von 2 bis 30 steht.

Eine bevorzugte Gruppe von Penetrationsförderern sind Alkanolalkoxylate der Formel

R-O-(-EO-)ₙ-R' (IV-a)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.

Eine weitere bevorzugte Gruppe von Penetrationsförderern sind Alkanol-alkoxylate der Formel

R-O-(-EO-)ₚ-(-PO-)_{q}-R' (IV-b)

in welcher
- R: die oben angegebene Bedeutung hat,
- R': die oben angegebene Bedeutung hat,
- EO: für -CH₂-CH₂-O- steht,

- PO: für 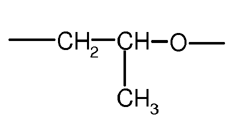 steht,
- p: für Zahlen von 1 bis 10 steht und
- q: für Zahlen von 1 bis 10 steht.

Eine weitere bevorzugte Gruppe von Penetrationsförderern sind Alkanol-Alkoxylate der Formel

R-O-(-PO-)ᵣ-(EO-)ₛ-R' (IV-c)

in welcher
- R: die oben angegebene Bedeutung hat,
- R': die oben angegebene Bedeutung hat,
- EO: für -CH₂-CH₂-O- steht,

- PO: für 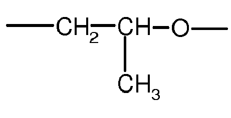 steht,
- r: für Zahlen von 1 bis 10 steht und
- s: für Zahlen von 1 bis 10 steht.

Eine weitere bevorzugte Gruppe von Penetrationsförderern sind Alkanol-alkoxylate der Formel

R-O-(-EO-)ₚ-(-BO-)_{q}-R' (IV-d)

in welcher
- R und: R die oben angegebenen Bedeutungen haben,
- EO: für CH₂-CH₂-O- steht,

- BO: für 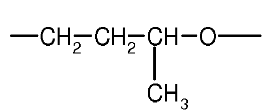 steht,
- p: für Zahlen von 1 bis 10 steht und
- q: für Zahlen von 1 bis 10 steht.

Eine weitere bevorzugte Gruppe von Penetrationsförderern sind Alkanol-alkoxylate der Formel

R-O-(-BO-)ᵣ-(-EO-)ₛ-R' (IV-e)

in welcher
- R und R': die oben angegebenen Bedeutungen haben,

- BO: für 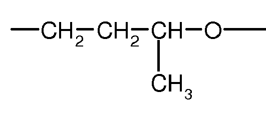 steht,
- EO: für CH₂-CH₂-O- steht,

- r: für Zahlen von 1 bis 10 steht und
- s: für Zahlen von 1 bis 10 steht.

Eine weitere bevorzugte Gruppe von Penetrationsförderern sind Alkanol-Alkoxylate der Formel

CH₃-(CH₂)ₜ-CH₂-O-(-CH₂-CH₂-O-)ᵤ-R' (IV-f)

in welcher
- R': die oben angegebene Bedeutung hat,
- t: für Zahlen von 8 bis 13 steht
- u: für Zahlen von 6 bis 17 steht.

In den zuvor angegebenen Formeln steht
R vorzugsweise für Butyl, iso-Butyl, n-Pentyl, iso-Pentyl, Neopentyl, n-Hexyl, iso-Hexyl, n-Octyl, iso-Octyl, 2-Ethyl-hexyl, Nonyl, iso-Nonyl, Decyl, n-Dodecyl, iso-Dodecyl, Lauryl, Myristyl, iso-Tridecyl, Trimethyl-nonyl, Palmityl, Stearyl oder Eicosyl.

Als Beispiel für ein Alkanol-Alkoxylat der Formel (IV-c) sei 2-Ethyl-hexyl-alkoxylat der Formel 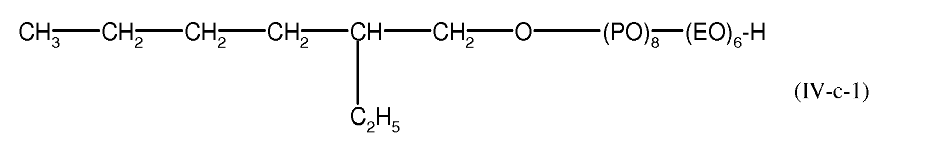 in welcher
EO für -CH₂-CH₂-O- steht,
PO für 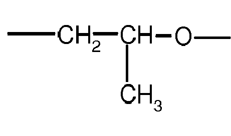 steht und
die Zahlen 8 und 6 Durchschnittswerte darstellen, genannt.

Als Beispiel für ein Alkanol-Alkoxylat der Formel (IV-d) sei die Formel

CH₃-(CH₂)₁₀-O-(-EO-)₆-(-BO-)₂-CH₃ (IV-d-1)

in welcher
- EO: für CH₂-CH₂-O- steht,

- BO: für 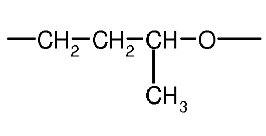 steht und
die Zahlen 10, 6 und 2 Durchschnittswerte darstellen, genannt.

Besonders bevorzugte Alkanol-Alkoxylate der Formel (IV-f) sind Verbindungen dieser Formel, in denen
- t: für Zahlen von 9 bis 12 und
- u: für Zahlen von 7 bis 9
steht.

Ganz besonders bevorzugt genannt sei Alkanol-Alkoxylat der Formel (IV-f-1)

CH₃-(CH₂)ₜ-CH₂-O-(-CH₂-CH₂-O-)ᵤ-H (IV-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98-35 553, WO 00-35 278 und EP-A 0 681 865).

Als Penetrationsförderer kommen beispielsweise auch Substanzen in Betracht, die die Löslichkeit der Verbindungen der Formel (I) im Spritzbelag fördern. Dazu gehören beispielsweise mineralische oder vegetabile Öle. Als Öle kommen alle üblicherweise in agrochemischen Mitteln einsetzbaren mineralischen oder vegetabilen - gegebenenfalls modifizierte - Öle in Frage. Beispielhaft genannt seien Sonnenblumenöl, Rapsöl, Olivenöl, Rizinusöl, Rüböl, Maiskernöl, Baumwollsaatöl und Sojabohnenöl oder die Ester der genannten Öle. Bevorzugt sind Rapsöl, Sonnenblumenöl und deren Methyl- oder Ethylester.

Die Konzentration an Penetrationsförderer kann in den erfindungsgemäßen Mitteln in einem weiten Bereich variiert werden. Bei einem formulierten Pflanzenschutzmittel liegt sie im allgemeinen bei 1 bis 95 Gew.-%, bevorzugt bei 1 bis 55 Gew.-%, besonders bevorzugt bei 15 - 40 Gew.-%. In den anwendungsfertigen Mitteln (Spritzbrühen) liegen die Konzentration im allgemeinen zwischen 0,1 und 10 g/l, bevorzugt zwischen 0,5 und 5 g/l.

Erfindungsgemäß hervorgehobene Kombinationen von Wirkstoff, Salz und Penetrationsförderer sind in folgender Tabelle aufgeführt. "Penetrationsförder gemäß Test" bedeutet dabei, dass jede Verbindung geeignet ist, die in dem Test für die Kutikelpenetration (Baur et al., 1997, Pesticide Science 51, 131-152) als Penetrationsförderer wirkt.

| **#** | **Wirkstoff** | **Salz** | **Penetrationsförderer** |
|---|---|---|---|
| 1 | (I-1) | Ammoniumsulfat | gemäß Test |
| 2 | (I-1) | Ammoniumlaktat | gemäß Test |
| 3 | (I-1) | Ammoniumnitrat | gemäß Test |
| 4 | (I-1) | Ammoniumthiosulfat | gemäß Test |
| 5 | (I-1) | Ammoniumthiocyanat | gemäß Test |
| 6 | (I-1) | Ammoniumcitrat | gemäß Test |
| 7 | (I-1) | Ammoniumoxalat | gemäß Test |
| 8 | (I-1) | Ammoniumformiat | gemäß Test |
| 9 | (I-1) | Ammoniumhydrogenphosphat | gemäß Test |
| 10 | (I-1) | Ammoniumdihydrogenphosphat | gemäß Test |
| 11 | (I-1) | Ammoniumcarbonat | gemäß Test |
| 12 | (I-1) | Ammoniumbenzoat | gemäß Test |
| 13 | (I-1) | Ammoniumsulfit | gemäß Test |
| 14 | (I-1) | Ammoniumbenzoat | gemäß Test |
| 15 | (I-1) | Ammoniumhydrogenoxalat | gemäß Test |
| 16 | (I-1) | Ammoniumhydrogencitrat | gemäß Test |
| 17 | (I-1) | Ammoniumacetat | gemäß Test |
| 18 | (I-1) | Tetramethylammoniumsulfat | gemäß Test |
| 19 | (I-1) | Tetramethylammoniumlaktat | gemäß Test |
| 20 | (I-1) | Tetramethylammoniumnitrat | gemäß Test |
| 21 | (I-1) | Tetramethylammoniumthiosulfat | gemäß Test |
| 22 | (I-1) | Tetramethylammoniumthiocyanat | gemäß Test |
| 23 | (I-1) | Tetramethylammoniumcitrat | gemäß Test |
| 24 | (I-1) | Tetramethylammoniumoxalat | gemäß Test |
| 25 | (I-1) | Tetramethylammoniumformiat | gemäß Test |
| 26 | (I-1) | Tetramethylammoniumhydrogenphosphat | gemäß Test |
| 27 | (I-1) | Tetramethylammoniumdihydrogenphosphat | gemäß Test |
| 28 | (I-1) | Tetraethylammoniumsulfat | gemäß Test |
| 29 | (I-1) | Tetraethylammoniumlaktat | gemäß Test |
| 30 | (I-1) | Tetraethylammoniumnitrat | gemäß Test |
| 31 | (I-1) | Tetraethylammoniumthiosulfat | gemäß Test |
| 32 | (I-1) | Tetraethylammoniumthiocyanat | gemäß Test |
| 33 | (I-1) | Tetraethylammoniumcitrat | gemäß Test |
| 34 | (I-1) | Tetraethylammoniumoxalat | gemäß Test |
| 35 | (I-1) | Tetraethylammoniumformiat | gemäß Test |
| 36 | (I-1) | Tetraethylammoniumhydrogenphosphat | gemäß Test |
| 37 | (I-1) | Tetraethylammoniumdihydrogenphosphat | gemäß Test |
| 38 | (I-2) | Ammoniumsulfat | gemäß Test |
| 39 | (I-2) | Ammoniumlaktat | gemäß Test |
| 40 | (I-2) | Ammoniumnitrat | gemäß Test |
| 41 | (I-2) | Ammoniumthiosulfat | gemäß Test |
| 42 | (I-2) | Ammoniumthiocyanat | gemäß Test |
| 43 | (I-2) | Ammoniumcitrat | gemäß Test |
| 44 | (I-2) | Ammoniumoxalat | gemäß Test |
| 45 | (I-2) | Ammoniumformiat | gemäß Test |
| 46 | (I-2) | Ammoniumhydrogenphosphat | gemäß Test |
| 47 | (I-2) | Ammoniumdihydrogenphosphat | gemäß Test |
| 48 | (I-2) | Ammoniumcarbonat | gemäß Test |
| 49 | (I-2) | Ammoniumbenzoat | gemäß Test |
| 50 | (I-2) | Ammoniumsulfit | gemäß Test |
| 51 | (I-2) | Ammoniumbenzoat | gemäß Test |
| 52 | (I-2) | Ammoniumhydrogenoxalat | gemäß Test |
| 53 | (I-2) | Ammoniumhydrogencitrat | gemäß Test |
| 54 | (I-2) | Ammoniumacetat | gemäß Test |
| 55 | (I-2) | Tetramethylammoniumsulfat | gemäß Test |
| 56 | (I-2) | Tetramethylammoniumlaktat | gemäß Test |
| 57 | (I-2) | Tetramethylammoniumnitrat | gemäß Test |
| 58 | (I-2) | Tetramethylammoniumthiosulfat | gemäß Test |
| 59 | (I-2) | Tetramethylammoniumthiocyanat | gemäß Test |
| 60 | (I-2) | Tetramethylammoniumcitrat | gemäß Test |
| 61 | (I-2) | Tetramethylammoniumoxalat | gemäß Test |
| 62 | (I-2) | Tetramethylammoniumformiat | gemäß Test |
| 63 | (I-2) | Tetramethylammoniumhydrogenphosphat | gemäß Test |
| 64 | (I-2) | Tetramethylammoniumdihydrogenphosphat | gemäß Test |
| 65 | (I-2) | Tetraethylammoniumsulfat | gemäß Test |
| 66 | (I-2) | Tetraethylammoniumlaktat | gemäß Test |
| 67 | (I-2) | Tetraethylammoniumnitrat | gemäß Test |
| 68 | (I-2) | Tetraethylammoniumthiosulfat | gemäß Test |
| 69 | (I-2) | Tetraethylammoniumthiocyanat | gemäß Test |
| 70 | (I-2) | Tetraethylammoniumcitrat | gemäß Test |
| 71 | (I-2) | Tetraethylammoniumoxalat | gemäß Test |
| 72 | (I-2) | Tetraethylammoniumformiat | gemäß Test |
| 73 | (I-2) | Tetraethylammoniumhydrogenphosphat | gemäß Test |
| 74 | (I-2) | Tetraethylammoniumdihydrogenphosphat | gemäß Test |
| 75 | (I-3) | Ammoniumsulfat | gemäß Test |
| 76 | (I-3) | Ammoniumlaktat | gemäß Test |
| 77 | (I-3) | Ammoniumnitrat | gemäß Test |
| 78 | (I-3) | Ammoniumthiosulfat | gemäß Test |
| 79 | (I-3) | Ammoniumthiocyanat | gemäß Test |
| 80 | (I-3) | Ammoniumcitrat | gemäß Test |
| 81 | (I-3) | Ammoniumoxalat | gemäß Test |
| 82 | (I-3) | Ammoniumformiat | gemäß Test |
| 83 | (I-3) | Ammoniumhydrogenphosphat | gemäß Test |
| 84 | (I-3) | Ammoniumdihydrogenphosphat | gemäß Test |
| 85 | (I-3) | Ammoniumcarbonat | gemäß Test |
| 86 | (I-3) | Ammoniumbenzoat | gemäß Test |
| 87 | (I-3) | Ammoniumsulfit | gemäß Test |
| 88 | (I-3) | Ammoniumbenzoat | gemäß Test |
| 89 | (I-3) | Ammoniumhydrogenoxalat | gemäß Test |
| 90 | (I-3) | Ammoniumhydrogencitrat | gemäß Test |
| 91 | (I-3) | Ammoniumacetat | gemäß Test |
| 92 | (I-3) | Tetramethylammoniumsulfat | gemäß Test |
| 93 | (I-3) | Tetramethylammoniumlaktat | gemäß Test |
| 94 | (I-3) | Tetramethylammoniumnitrat | gemäß Test |
| 95 | (I-3) | Tetramethylammoniumthiosulfat | gemäß Test |
| 96 | (I-3) | Tetramethylammoniumthiocyanat | gemäß Test |
| 97 | (I-3) | Tetramethylammoniumcitrat | gemäß Test |
| 98 | (I-3) | Tetramethylammoniumoxalat | gemäß Test |
| 99 | (I-3) | Tetramethylammoniumformiat | gemäß Test |
| 100 | (I-3) | Tetramethylammoniumhydrogenphosphat | gemäß Test |
| 101 | (I-3) | Tetramethylammoniumdihydrogenphosphat | gemäß Test |
| 102 | (I-3) | Tetraethylammoniumsulfat | gemäß Test |
| 103 | (I-3) | Tetraethylammoniumlaktat | gemäß Test |
| 104 | (I-3) | Tetraethylammoniumnitrat | gemäß Test |
| 105 | (I-3) | Tetraethylammoniumthiosulfat | gemäß Test |
| 106 | (I-3) | Tetraethylammoniumthiocyanat | gemäß Test |
| 107 | (I-3) | Tetraethylammoniumcitrat | gemäß Test |
| 108 | (I-3) | Tetraethylammoniumoxalat | gemäß Test |
| 109 | (I-3) | Tetraethylammoniumformiat | gemäß Test |
| 110 | (I-3) | Tetraethylanunoniunihydrogenphosphat | gemäß Test |
| 111 | (I-3) | Tetraethylammoniumdihydrogenphosphat | gemäß Test |
| 112 | (I-4) | Ammoniumsulfat | gemäß Test |
| 113 | (I-4) | Ammoniumlaktat | gemäß Test |
| 114 | (I-4) | Ammoniumnitrat | gemäß Test |
| 115 | (I-4) | Ammoniumthiosulfat | gemäß Test |
| 116 | (I-4) | Ammoniumthiocyanat | gemäß Test |
| 117 | (I-4) | Ammoniumcitrat | gemäß Test |
| 118 | (I-4) | Ammoniumoxalat | gemäß Test |
| 119 | (I-4) | Ammoniumformiat | gemäß Test |
| 120 | (I-4) | Ammoniumhydrogenphosphat | gemäß Test |
| 121 | (I-4) | Ammoniumdihydrogenphosphat | gemäß Test |
| 122 | (I-4) | Ammoniumcarbonat | gemäß Test |
| 123 | (I-4) | Ammoniumbenzoat | gemäß Test |
| 124 | (I-4) | Ammoniumsulfit | gemäß Test |
| 125 | (I-4) | Ammoniumbenzoat | gemäß Test |
| 126 | (I-4) | Ammoniumhydrogenoxalat | gemäß Test |
| 127 | (I-4) | Ammoniumhydrogencitrat | gemäß Test |
| 128 | (I-4) | Ammoniumacetat | gemäß Test |
| 129 | (I-4) | Tetramethylammoniumsulfat | gemäß Test |
| 130 | (I-4) | Tetramethylammoniumlaktat | gemäß Test |
| 131 | (I-4) | Tetramethylammoniumnitrat | gemäß Test |
| 132 | (I-4) | Tetramethylammoniumthiosulfat | gemäß Test |
| 133 | (I-4) | Tetramethylammoniumthiocyanat | gemäß Test |
| 134 | (I-4) | Tetramethylammoniumcitrat | gemäß Test |
| 135 | (I-4) | Tetramethylammoniumoxalat | gemäß Test |
| 136 | (I-4) | Tetramethylammoniumformiat | gemäß Test |
| 137 | (I-4) | Tetramethylammoniumhydrogenphosphat | gemäß Test |
| 138 | (I-4) | Tetramethylammoniumdihydrogenphosphat | gemäß Test |
| 139 | (I-4) | Tetraethylammoniumsulfat | gemäß Test |
| 140 | (I-4) | Tetraethylammoniumlaktat | gemäß Test |
| 14 | (I-4) | Tetraethylammoniumnitrat | gemäß Test |
| 142 | (I-4) | Tetraethylammoniumthiosulfat | gemäß Test |
| 143 | (I-4) | Tetraethylammoniumthiocyanat | gemäß Test |
| 144 | (I-4) | Tetraethylammoniumcitrat | gemäß Test |
| 145 | (I-4) | Tetraethylammoniumoxalat | gemäß Test |
| 146 | (I-4) | Tetraethylammoniumformiat | gemäß Test |
| 147 | (I-4) | Tetraethylammoniumhydrogenphosphat | gemäß Test |
| 148 | (I-4) | Tetraethylammoniumdihydrogenphosphat | gemäß Test |
| 149 | (I-5) | Ammoniumsulfat | gemäß Test |
| 150 | (I-5) | Ammoniumlaktat | gemäß Test |
| 151 | (I-5) | Ammoniumnitrat | gemäß Test |
| 152 | (I-5) | Ammoniumthiosulfat | gemäß Test |
| 153 | (I-5) | Ammoniumthiocyanat | gemäß Test |
| 154 | (I-5) | Ammoniumcitrat | gemäß Test |
| 155 | (I-5) | Ammoniumoxalat | gemäß Test |
| 156 | (I-5) | Ammoniumformiat | gemäß Test |
| 157 | (I-5) | Ammoniumhydrogenphosphat | gemäß Test |
| 158 | (I-5) | Ammoniumdihydrogenphosphat | gemäß Test |
| 159 | (I-5) | Ammoniumcarbonat | gemäß Test |
| 160 | (I-5) | Ammoniumbenzoat | gemäß Test |
| 161 | (I-5) | Ammoniumsulfit | gemäß Test |
| 162 | (I-5) | Ammoniumbenzoat | gemäß Test |
| 163 | (I-5) | Ammoniumhydrogenoxalat | gemäß Test |
| 164 | (I-5) | Ammoniumhydrogencitrat | gemäß Test |
| 165 | (I-5) | Ammoniumacetat | gemäß Test |
| 166 | (I-5) | Tetramethylanunoniumsulfat | gemäß Test |
| 167 | (I-5) | Tetramethylammoniumlaktat | gemäß Test |
| 168 | (I-5) | Tetramethylammoniumnitrat | gemäß Test |
| 169 | (I-5) | Tetramethylammoniumthiosulfat | gemäß Test |
| 170 | (I-5) | Tetramethylammoniumthiocyanat | gemäß Test |
| 171 | (I-5) | Tetramethylammoniumcitrat | gemäß Test |
| 172 | (I-5) | Tetramethylammoniumoxalat | gemäß Test |
| 173 | (I-5) | Tetramethylammoniumformiat | gemäß Test |
| 174 | (I-5) | Tetramethylammoniumhydrogenphosphat | gemäß Test |
| 175 | (I-5) | Tetramethylammoniumdihydrogenphosphat | gemäß Test |
| 176 | (I-5) | Tetraethylammoniumsulfat | gemäß Test |
| 177 | (I-5) | Tetraethylammoniumlaktat | gemäß Test |
| 178 | (I-5) | Tetraethylammoniumnitrat | gemäß Test |
| 179 | (I-5) | Tetraethylammoniumthiosulfat | gemäß Test |
| 180 | (I-5) | Tetraethylammoniumthiocyanat | gemäß Test |
| 181 | (I-5) | Tetraethylammoniumcitrat | gemäß Test |
| 182 | (I-5) | Tetraethylammoniumoxalat | gemäß Test |
| 183 | (I-5) | Tetraethylammoniumformiat | gemäß Test |
| 184 | (I-5) | Tetraethylammoniumhydrogenphosphat | gemäß Test |
| 185 | (I-5) | Tetraethylammoniumdihydrogenphosphat | gemäß Test |
| 186 | (I-6) | Ammoniumsulfat | gemäß Test |
| 187 | (I-6) | Ammoniumlaktat | gemäß Test |
| 188 | (I-6) | Ammoniumnitrat | gemäß Test |
| 189 | (I-6) | Ammoniumthiosulfat | gemäß Test |
| 190 | (I-6) | Ammoniumthiocyanat | gemäß Test |
| 191 | (I-6) | Ammoniumcitrat | gemäß Test |
| 192 | (I-6) | Ammoniumoxalat | gemäß Test |
| 193 | (I-6) | Ammoniumformiat | gemäß Test |
| 194 | (I-6) | Ammoniumhydrogenphosphat | gemäß Test |
| 195 | (I-6) | Ammoniumdihydrogenphosphat | gemäß Test |
| 196 | (I-6) | Ammoniumcarbonat | gemäß Test |
| 197 | (I-6) | Ammoniumbenzoat | gemäß Test |
| 198 | (I-6) | Ammoniumsulfit | gemäß Test |
| 199 | (I-6) | Ammoniumbenzoat | gemäß Test |
| 200 | (I-6) | Ammoniumhydrogenoxalat | gemäß Test |
| 201 | (I-6) | Ammoniumhydrogencitrat | gemäß Test |
| 202 | (I-6) | Ammoniumacetat | gemäß Test |
| 203 | (I-6) | Tetramethylammoniumsulfat | gemäß Test |
| 204 | (I-6) | Tetramethylammoniumlaktat | gemäß Test |
| 205 | (I-6) | Tetramethylammoniumnitrat | gemäß Test |
| 206 | (I-6) | Tetramethylammoniumthiosulfat | gemäß Test |
| 207 | (I-6) | Tetramethylammoniumthiocyanat | gemäß Test |
| 208 | (I-6) | Tetramethylammoniumcitrat | gemäß Test |
| 209 | (I-6) | Tetramethylammoniumoxalat | gemäß Test |
| 210 | (I-6) | Tetramethylammoniumformiat | gemäß Test |
| 211 | (I-6) | Tetramethylammoniumhydrogenphosphat | gemäß Test |
| 212 | (I-6) | Tetramethylammoniumdihydrogenphosphat | gemäß Test |
| 213 | (I-6) | Tetraethylammoniumsulfat | gemäß Test |
| 214 | (I-6) | Tetraethylammoniumlaktat | gemäß Test |
| 215 | (I-6) | Tetraethylammoniumnitrat | gemäß Test |
| 216 | (I-6) | Tetraethylammoniumthiosulfat | gemäß Test |
| 217 | (I-6) | Tetraethylammoniumthiocyanat | gemäß Test |
| 218 | (I-6) | Tetraethylammoniumcitrat | gemäß Test |
| 219 | (I-6) | Tetraethylammoniumoxalat | gemäß Test |
| 220 | (I-6) | Tetraethylammoniumformiat | gemäß Test |
| 221 | (I-6) | Tetraethylammoniumhydrogenphosphat | gemäß Test |
| 222 | (I-6) | Tetraethylammoniumdihydrogenphosphat | gemäß Test |
| 223 | (I-7) | Ammoniumsulfat | gemäß Test |
| 224 | (I-7) | Ammoniumlaktat | gemäß Test |
| 225 | (I-7) | Ammoniumnitrat | gemäß Test |
| 226 | (I-7) | Ammoniumthiosulfat | gemäß Test |
| 227 | (I-7) | Ammoniumthiocyanat | gemäß Test |
| 228 | (I-7) | Ammoniumcitrat | gemäß Test |
| 229 | (I-7) | Ammoniumoxalat | gemäß Test |
| 230 | (I-7) | Ammoniumformiat | gemäß Test |
| 231 | (I-7) | Ammoniumhydrogenphosphat | gemäß Test |
| 232 | (I-7) | Ammoniumdihydrogenphosphat | gemäß Test |
| 233 | (I-7) | Ammoniumcarbonat | gemäß Test |
| 234 | (I-7) | Ammoniumbenzoat | gemäß Test |
| 235 | (I-7) | Ammoniumsulfit | gemäß Test |
| 236 | (I-7) | Ammoniumbenzoat | gemäß Test |
| 237 | (I-7) | Ammoniumhydrogenoxalat | gemäß Test |
| 238 | (I-7) | Ammoniumhydrogencitrat | gemäß Test |
| 239 | (I-7) | Ammoniumacetat | gemäß Test |
| 240 | (I-7) | Tetramethylammoniumsulfat | gemäß Test |
| 241 | (I-7) | Tetramethylammoniumlaktat | gemäß Test |
| 242 | (I-7) | Tetramethylammoniumnitrat | gemäß Test |
| 243 | (I-7) | Tetramethylammoniumthiosulfat | gemäß Test |
| 244 | (I-7) | Tetramethylammoniumthiocyanat | gemäß Test |
| 245 | (I-7) | Tetramethylammoniumcitrat | gemäß Test |
| 246 | (I-7) | Tetramethylammoniumoxalat | gemäß Test |
| 247 | (I-7) | Tetramethylammoniumformiat | gemäß Test |
| 248 | (I-7) | Tetramethylammoniumhydrogenphosphat | gemäß Test |
| 249 | (I-7) | Tetramethylammoniumdihydrogenphosphat | gemäß Test |
| 250 | (I-7) | Tetraethylammoniumsulfat | gemäß Test |
| 251 | (I-7) | Tetraethylammoniumlaktat | gemäß Test |
| 252 | (I-7) | Tetraethylammoniumnitrat | gemäß Test |
| 253 | (I-7) | Tetraethylammoniumthiosulfat | gemäß Test |
| 254 | (I-7) | Tetraethylammoniumthiocyanat | gemäß Test |
| 255 | (I-7) | Tetraethylammoniumcitrat | gemäß Test |
| 256 | (I-7) | Tetraethylammoniumoxalat | gemäß Test |
| 257 | (I-7) | Tetraethylammoniumformiat | gemäß Test |
| 258 | (I-7) | Tetraethylammoniumhydrogenphosphat | gemäß Test |
| 259 | (I-7) | Tetraethylammoniumdihydrogenphosphat | gemäß Test |
| 260 | (Ia-1) | Ammoniumsulfat | gemäß Test |
| 261 | (Ia-1) | Ammoniumlaktat | gemäß Test |
| 262 | (Ia-1) | Ammoniumnitrat | gemäß Test |
| 263 | (Ia-1) | Ammoniumthiosulfat | gemäß Test |
| 264 | (Ia-1) | Ammoniumthiocyanat | gemäß Test |
| 265 | (Ia-1) | Ammoniumcitrat | gemäß Test |
| 266 | (Ia-1) | Ammoniumoxalat | gemäß Test |
| 267 | (Ia-1) | Ammoniumformiat | gemäß Test |
| 268 | (Ia-1) | Ammoniumhydrogenphosphat | gemäß Test |
| 269 | (Ia-1) | Ammoniumdihydrogenphosphat | gemäß Test |
| 270 | (Ia-1) | Ammoniumcarbonat | gemäß Test |
| 271 | (Ia-1) | Ammoniumbenzoat | gemäß Test |
| 272 | (Ia-1) | Ammoniumsulfit | gemäß Test |
| 273 | (Ia-1) | Ammoniumbenzoat | gemäß Test |
| 274 | (Ia-1) | Ammoniumhydrogenoxalat | gemäß Test |
| 275 | (Ia-1) | Ammoniumhydrogencitrat | gemäß Test |
| 276 | (Ia-1) | Ammoniumacetat | gemäß Test |
| 277 | (Ia-1) | Tetramethylammoniumsulfat | gemäß Test |
| 278 | (Ia-1) | Tetramethylammoniumlaktat | gemäß Test |
| 279 | (Ia-1) | Tetramethylammoniumnitrat | gemäß Test |
| 280 | (Ia-1) | Tetramethylammoniumthiosulfat | gemäß Test |
| 281 | (Ia-1) | Tetramethylammoniumthiocyanat | gemäß Test |
| 282 | (Ia-1) | Tetramethylammoniumcitrat | gemäß Test |
| 283 | (Ia-1) | Tetramethylammoniumoxalat | gemäß Test |
| 284 | (Ia-1) | Tetramethylammoniumformiat | gemäß Test |
| 285 | (Ia-1) | Tetramethylammoniumhydrogenphosphat | gemäß Test |
| 286 | (Ia-1) | Tetramethylammoniumdihydrogenphosphat | gemäß Test |
| 287 | (Ia-1) | Tetraethylammoniumsulfat | gemäß Test |
| 288 | (Ia-1) | Tetraethylammoniumlaktat | gemäß Test |
| 289 | (Ia-1) | Tetraethylammoniumnitrat | gemäß Test |
| 290 | (Ia-1) | Tetraethylammoniumthiosulfat | gemäß Test |
| 291 | (Ia-1) | Tetraethylammoniumthiocyanat | gemäß Test |
| 292 | (Ia-1) | Tetraethylammoniumcitrat | gemäß Test |
| 293 | (Ia-1) | Tetraethylammoniumoxalat | gemäß Test |
| 294 | (Ia-1) | Tetraethylammoniumformiat | gemäß Test |
| 295 | (Ia-1) | Tetraethylammoniumhydrogenphosphat | gemäß Test |
| 296 | (Ia-1) | Tetraethylammoniumdihydrogenphosphat | gemäß Test |

Erfindungsgemäße Pflanzenschutzmittel können auch weitere Komponenten, beispielsweise Tenside bzw. Dispergierhilfsmittel oder Emulgatoren enthalten.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Die folgenden Beispiele dienen zur Verdeutlichung der Erfindung und sind in keiner Weise beschränkend auszulegen.

### Beispiel 1: Blattapplikation Myzus persicae/Paprikaschote

| | | |
|---|---|---|
| Lösungsmittel: | 7 | Gewichtsteile Dimethylformamid |
| Emulgator: | 2 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration. Für die Anwendung mit Ammoniumsalzen und Penetrationsförderer (Rapsölmethylester 500 EW) werden diese jeweils in einer Konzentration von 1000 ppm der Spritzbrühe beigegeben.

Paprikapflanzen (*Capsicum annuum*), die stark von der Grünen Pfirsichblattlaus (*Myzus persicae*) befallen sind, werden durch Spritzung mit der Wirkstoffzubereitung in der gewünschten Konzentration behandelt. Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

**Tabelle A: Myzus persicae - Test**

| **Wirkstoff** | **Konzentration in g a.i./ha** | **Abtötung in % nach 3^{d}** | **Abtötung in % nach 7^{d}** |
|---|---|---|---|
| **(II-1)** | 0.192 | 0 | 0 |
| **(II-1) +RME EW 500 + AS** | 0.192 | 0 | 0 |
| **(I-1)** | 0.192 | 0 | 0 |
| **(I-1) +RME EW 500 + AS** | 0.192 | 90 | 100 |

| | | | |
|---|---|---|---|
| RME = Rapsölmethylester (Einsatz formuliert als 500 EW; Konzentrationsangabe in g Wirkstoff / 1) AS = Ammoniumsulfat | | | |

### Beispiel 2: Blattapplikation Aphis gossypii/Baumwolle

| | | |
|---|---|---|
| Lösungsmittel: | 7 | Gewichtsteile Dimethylformamid |
| Emulgator: | 2 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration. Für die Anwendung mit Ammoniumsalzen und Penetrationsförderer (Rapsölmethylester 500 EW) werden diese jeweils in einer Konzentration von 1000 ppm der Spritzbrühe beigegeben.

Baumwollpflanzen (Gossypium hirsutum), die stark von der Baumwollblattlaus (*Aphis gossypii*) befallen sind, werden durch Spritzung mit der Wirkstoffzubereitung in der gewünschten Konzentration behandelt. Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle B: Aphis gossypii - Test**

| **Wirkstoff** | **Konzentration in g a.i./ha** | **Abtötung in % nach 3^{d}** | **Abtötung in % nach 7^{d}** |
|---|---|---|---|
| **(II-1)** | 0.192 | 20 | 45 |
| **(II-1) +RME EW 500 + AS** | 0.192 | 20 | 65 |
| **(I-1)** | 0.192 | 50 | 75 |
| **(I-1) +RME EW 500 + AS** | 0.192 | 94 | 100 |

| | | | |
|---|---|---|---|
| RME = Rapsölmethylester (Einsatz formuliert als 500 EW; Konzentrationsangabe in g Wirkstoff / 1) AS = Ammoniumsulfat | | | |

## Patentansprüche

1. Zusammensetzung umfassend
- mindestens eine Verbindung der Formel (I) 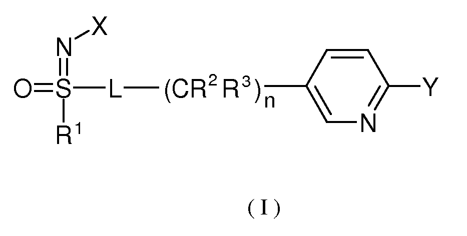
in welcher
X für NO₂, CN oder COOR⁴ steht,
L für eine Einzelbindung steht oder R¹, S und L zusammen einen 4-, 5- oder 6-gliedrigen Ring bilden,
R¹ für C₁-C₄-Alkyl steht,
R¹ und R² unabhängig voneinander für Wasserstoff, C₁-C₄-Alkyl, Fluor, Chlor oder Brom stehen,
n für eine ganze Zahl von 0 bis 3 steht,
Y für Halogen-C₁-C₄-alkyl steht und
R⁴ für C₁-C₃-Alkyl steht und
- mindestens ein Salz der Formel (III) 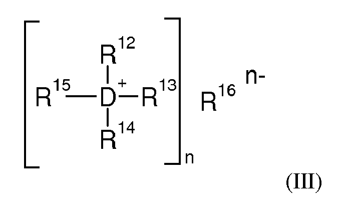
in welcher
D für Stickstoff oder Phosphor steht,
R¹², R¹³, R¹⁴ und R¹⁵ unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, NO₂ und CN ausgewählt sein können,
n für 1, 2, 3 oder 4 steht,
R¹⁶ für ein anorganisches oder organisches Anion steht.

2. Zusammensetzung gemäß Anspruch 1, **dadurch gekennzeichnet, dass** in der Verbindung der Formel (I) L für eine Einfachbindung steht, X für NO₂ oder CN steht, Y für CF₃ steht, R¹ für Methyl oder Ethyl steht, R² und R³ unabhängig voneinander für Wasserstoff, Methyl oder Ethyl stehen und n für eine ganze Zahl von 1 bis 3 steht.

3. Zusammensetzung nach Anspruch 1 oder 2, **dadurch gekennzeichnet, dass** als Verbindung der Formel (I) die Verbindung der Formel (I-1) 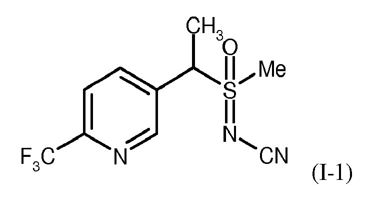 eingesetzt wird.

4. Zusammensetzung gemäß einem oder mehreren der Ansprüche 1 bis 3, **dadurch gekennzeichnet, dass** der Gehalt der Verbindung der Formel (I) zwischen 0,5 und 50 Gew.-% beträgt.

5. Zusammensetzung gemäß einem der Ansprüche 1 bis 4, **dadurch gekennzeichnet, dass** D für Stickstoff steht.

6. Zusammensetzung gemäß Anspruch 5, **dadurch gekennzeichnet, dass** R¹⁶ für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht.

7. Zusammensetzung gemäß Anspruch 5, **dadurch gekennzeichnet, dass** R¹⁶ für Carbonat, Pentaborat, Sulfit, Benzoat, Hydrogenoxalat, Hydrogencitrat, Methylsulfat oder Tetrafluoroborat steht.

8. Zusammensetzung gemäß Anspruch 5, **dadurch gekennzeichnet, dass** R¹⁶ für Laktat, Sulfat, Nitrat, Thiosulfat, Thiocyanat, Citrat, Oxalat oder Formiat steht.

9. Zusammensetzung gemäß Anspruch 5, **dadurch gekennzeichnet, dass** R¹⁶ für Sulfat steht.

10. Zusammensetzung gemäß Anspruch 5, **dadurch gekennzeichnet, dass** das Salz der Formel (III) Ammoniumsulfat ist.

11. Zusammensetzung gemäß einem der Ansprüche 1 bis 10, **dadurch gekennzeichnet, dass** sie mindestens einen Penetrationsförderer enthält.

12. Zusammensetzung gemäß Anspruch 11, **dadurch gekennzeichnet, dass** der Penetrationsförderer ein Fettalkohol-Alkoxylat der Formel (IV)
R-O-(-AO)ᵥ-R' (IV)
in welcher
R für geradkettiges oder verzweigtes Alkyl mit 4 bis 20 Kohlenstoffatomen steht,
R' für Wasserstoff, Methyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
v für Zahlen von 2 bis 30 steht,
oder ein mineralisches oder vegetabiles Öl oder der Ester eines mineralischen oder vegetabilen Öls ist.

13. Zusammensetzung gemäß Anspruch 11, **dadurch gekennzeichnet, dass** der Penetrationsförderer Ester eines vegetabilen Öls ist.

14. Zusammensetzung gemäß Anspruch 13, **dadurch gekennzeichnet, dass** der Penetrationsförderer Rapsölmethylester ist.

15. Zusammensetzung gemäß einem oder mehreren der Ansprüche 11 bis 14, **dadurch gekennzeichnet, dass** der Gehalt an Penetrationsförderer 1 bis 95 Gew.-% beträgt.

16. Verfahren zur Bekämpfung von Schadinsekten, **dadurch gekennzeichnet, dass** eine Zusammensetzung gemäß einem oder mehreren der Ansprüche 1 bis 15 unverdünnt oder verdünnt in solcher Menge auf Insekten oder ihren Lebensraum appliziert wird, dass eine wirksame Menge der enthaltenen insektiziden Wirkstoffe auf die Insekten oder ihren Lebensraum wirkt.

17. Verfahren zur Steigerung der Wirkung von Pflanzenschutzmitteln enthaltend eine Verbindung der Formel (I), **dadurch gekennzeichnet, dass** das anwendungsfertige Mittel (Spritzbrühe) unter Einsatz eines Salzes der Formel (III) zubereitet wird.

18. Verfahren gemäß Anspruch 17, **dadurch gekennzeichnet, dass** die Spritzbrühe unter Einsatz eines Penetrationsförderers zubereitet wird.

19. Verfahren gemäß Anspruch 17 oder 18, **dadurch gekennzeichnet, dass** das Salz der Formel (III) in einer Endkonzentration von 0,75 bis 37,5 mmol/l vorliegt.

20. Verfahren gemäß Anspruch 18, **dadurch gekennzeichnet, dass** der Penetrationsförderer in einer Endkonzentration von 0,1 bis 10 g/l vorliegt.

21. Verfahren gemäß Anspruch 18 oder 19, **dadurch gekennzeichnet, dass** der Penetrationsförderer in einer Endkonzentration von 0,1 bis 10 g/l und das Salz der Formel (III) in einer Endkonzentration von 0,75 bis 37,5 mmol/l vorliegt.

22. Verwendung eines Salzes der Formel (III) gemäß Anspruch 1 zur Steigerung der Wirkung eines Pflanzenschutzmittels enthaltend eine Verbindung der Formel (I), **dadurch gekennzeichnet, dass** das Salz bei der Zubereitung eines anwendungsfertigen Pflanzenschutzmittels (Spritzbrühe) eingesetzt wird.

23. Verwendung gemäß Anspruch 22, **dadurch gekennzeichnet, dass** das Salz der Formel (III) in dem anwendungsfertigen Pflanzenschutzmittel in einer Konzentration von 0,5 bis 80 mmol/l vorliegt.

24. Verwendung gemäß Anspruch 22 oder 23 **dadurch gekennzeichnet, dass** das Salz bei der Zubereitung eines anwendungsfertigen Pflanzenschutzmittels (Spritzbrühe) eingesetzt wird, das weiterhin einen Penetrationsförderer enthält.
